(19) Europäisches Patentamt / European Patent Office / Office européen des brevets

(11) **EP 1 094 592 B1**

(12) **EUROPÄISCHE PATENTSCHRIFT**

(45) Veröffentlichungstag und Bekanntmachung des Hinweises auf die Patenterteilung:
**20.10.2010 Patentblatt 2010/42**

(51) Int Cl.:
*H02M 5/458* *(2006.01)*    *H02M 7/5387* *(2007.01)*

(21) Anmeldenummer: **00116556.2**

(22) Anmeldetag: **01.08.2000**

(54) **Verfahren zur Ausgangsspannungsbegrenzung für einen spannungs/frequenzgeführten Umrichter mit Zwischenkreis und einen Umrichter**

Method for output voltage limitation for a voltage/frequency controlled converter with intermediate circuit and a converter

Procédé de limitation de tension de sortie pour un convertisseur commandé en tension/fréquence avec circuit intermédiaire et un convertisseur

(84) Benannte Vertragsstaaten:
**AT BE CH CY DE DK ES FI FR GB GR IE IT LI LU MC NL PT SE**

(30) Priorität: **03.09.1999 DE 19942203**

(43) Veröffentlichungstag der Anmeldung:
**25.04.2001 Patentblatt 2001/17**

(73) Patentinhaber: **SEW-EURODRIVE GmbH & Co. KG 76646 Bruchsal (DE)**

(72) Erfinder:
• **Meyer, Ralph**
  **76646 Bruchsal (DE)**
• **Wolf, Harald**
  **76694 Forst (DE)**
• **Hammel, Wolfgang**
  **76646 Bruchsal (DE)**

(56) Entgegenhaltungen:
WO-A-94/01922    DE-A- 3 223 786
DE-A- 4 006 163    DE-A- 4 110 225

• BLAABJERG F ET AL: "Adaptive SVM to compensate DC-link voltage ripple for component minimized voltage source inverters" POWER ELECTRONICS SPECIALISTS CONFERENCE, 1997. PESC '97 RECORD., 28TH ANNUAL IEEE ST. LOUIS, MO, USA 22-27 JUNE 1997, NEW YORK, NY, USA,IEEE, US, 22. Juni 1997 (1997-06-22), Seiten 580-589, XP010241602 ISBN: 0-7803-3840-5

**Beschreibung**

Die Erfindung betrifft ein Verfahren zur Ausgangsspannungsbegrenzung für einen spannungs-/frequenzgeführten Umrichter mit Zwischenkreis und einen Umrichter.

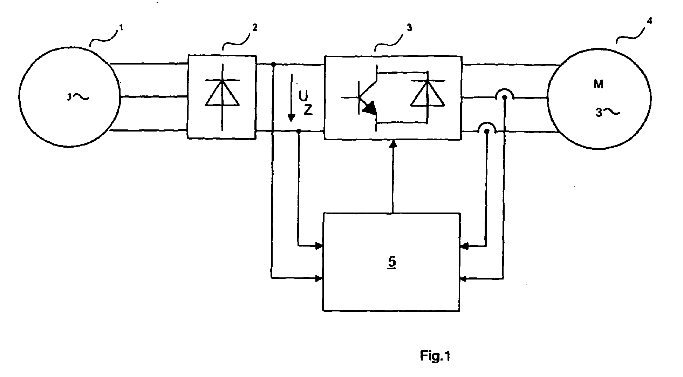

Fig. 1 zeigt die wesentlichen funktionalen Bestandteile eines beispielhaften Umrichters des Standes der Technik. Darin wird über eine Gleichrichtereinheit 2 die Netzspannung 1 zu einer Gleichspannung gleichgerichtet, welche dem Wechselrichter 3 als Zwischenkreisspannung $U_z$ zugeführt wird. Der Drehstrommotor 4 ist mit den Ausgangsklemmen des Wechselrichters 3 verbunden. Der Wechselrichter 3 wird durch die Steuereinheit 5 angesteuert. Der Steuereinheit 5 wird der Messwert der Zwischenkreisspannung und Messwerte für den Strom des Motors zugeführt. Die Steuereinheit 5 umfasst eine elektronische Steuer- und Regelungsschaltung. In einem weiteren erfindungsgemäßen Ausführungsbeispiel wird die Steuer- und Regelungsschaltung im Wesentlichen als Software ausgebildet. Bei einem spannungs-/frequenzgeführten Umrichter wird zu einer gewünschten Frequenz $f$ des Umrichter-Ausgangsspannungszeigers ein Sollwert für dessen Betrag $|U|$ bestimmt, indem im einfachsten Fall eine U/f-Kennlinie verwendet wird.

Die Zwischenkreisspannung wird zum Ersten beeinflusst von der Netzspannung. Insbesondere sind Umrichter bekannt, die an verschiedenen Netzspannungen, also über einen weiten Bereich von Netzspannungen, wie beispielsweise von 380 V bis 500V, betreibbar sind. Diese in unterschiedlichen Ländern verschiedenen Netzspannungen weisen darüber hinaus teilweise verschiedene Netzfrequenzen auf. Zum Zweiten wird die Zwischenkreisspannung beeinflusst von Netzspannungsschwankungen.

Darüber hinaus wird die Zwischenkreisspannung beeinflusst von der Betriebsart des Motors. Im generatorischen Betrieb speist der Motor Energie zurück in den Zwischenkreis. Wenn die Gleichrichtereinheit nicht rückspeisefähig ist, steigt daher die Zwischenkreisspannung an bis zu einem Schwellwert der Zwischenkreisspannung, bei dem eine Bremschoppereinheit zugeschaltet wird, die dann die Energie verbraucht.

Bei den beschriebenen Umrichtern wird der Betrag des Umrichter-Ausgangsspannungszeigers $|U|$ auf den Wert $U_z/\sqrt{3}$ begrenzt, um ein Übersteuern, also eine Abweichung von der Sinusform der Ausgangsspannung zu vermeiden. Dazu ist es notwendig, dass die Ausgangspotentiale des Umrichters eine geeignete Schwingung der dreifachen Frequenz, also $3 \cdot f$, aufweisen. Wirkt sonst kein weiterer Begrenzungsmechanismus, ist somit die höchstmögliche Spannungsausnutzung bzw. Motorausnutzung erreichbar unter Einhaltung der Sinusform.

Bei leerlaufendem oder nur ein geringes Drehmoment erzeugendem Motor mit geringer Lastträgheit kann das System Umrichter-Motor instabil werden, wenn der Betriebspunkt im Feldschwächbereich liegt, also die Spannungsstellgrenze erreicht ist.

Eine mögliche Ursache ist, dass ein unerwünschter Rückkoppelpfad wirksam wird: Steigt die Zwischenkreisspannung infolge kurzzeitigen generatorischen Betriebs, so stellt der Umrichter eine höhere Ausgangsspannung, weil die Spannungsstellgrenze sich mit der Zwischenkreisspannung entsprechend erhöht. **Dadurch wird der Motor beschleunigt, wechselt also in den motorischen Betrieb. Infolgedessen** sinkt **dann** die Zwischenkreisspannung wieder auf Werte entsprechend dem Netzspannungsniveau Wenn also der Motor auf Spannungsschwankungen reagiert, so besteht bei dieser Art der Spannungsbegrenzung die Gefahr, dass das System instabil wird und unerwünschte Pendelschwingungen auftreten.

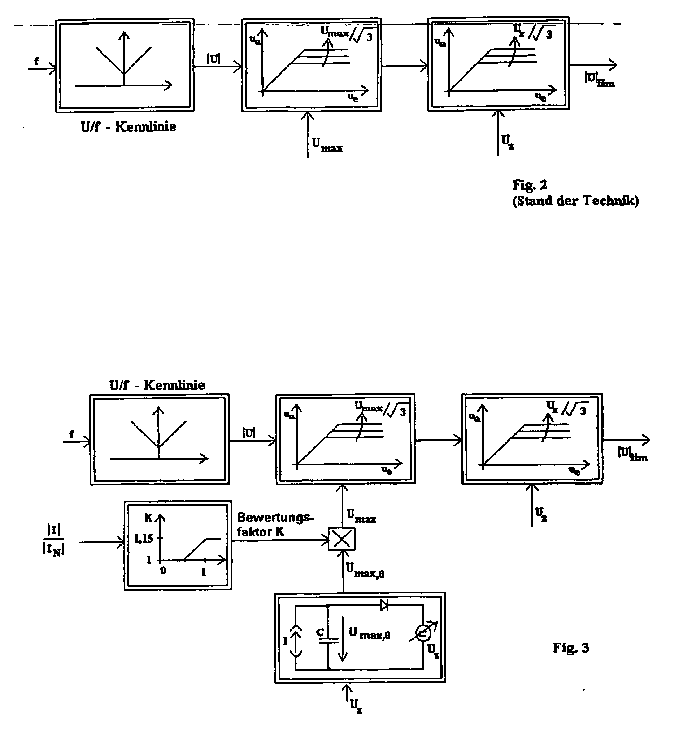

Beim Stand der Technik wird zur Vermeidung dieses Ansteigens der Ausgangspannung im generatorischen Betrieb eine zusätzliche Begrenzung angewendet. Dies ist in der Figur 2 beispielhaft gezeigt. Dabei wird der Betrag des Ausgangsspannungszeigers zusätzlich auf $U_{max}/\sqrt{3}$ begrenzt, wobei $U_{max}$ eingebbar ist, durch Messung der Zwischenkreisspannung während der Inbetriebnahme ermittelt wird oder als fester Wert implementiert ist, In den beiden erstgenannten Fällen ist daher auch im generatorischen Betrieb die Ausgangsspannung auf denselben Wert wie im motorischen Betrieb begrenzbar, wodurch die genannten Pendelschwingungen vermeidbar sind. Nachteilig ist im erstgenannten Fall, dass ein Wert eingegeben werden muss und daher auch eine Vorrichtung zur Eingabe eines solchen Wertes vorhanden sein muss. Außerdem besteht die Gefahr einer fehlerhaften Eingabe. Nachteilig in beiden Fällen ist, dass der Begrenzungswert nicht Änderungen der Netzspannung folgen kann und daher unter Umständen die Ausnutzung der eigentlich zur Verfügung stehenden Netzspannung mangelhaft ist. Weiterer Nachteil ist, dass bei dauerhafter generatorischer Belastung die Spannungsausnutzung unvollständig ist.

Unter Änderungen der Netzspannung sind hierbei immer Änderungen zu verstehen, die sich über Sekunden oder noch längere Zeiträume erstrecken. Bekannt sind beispielsweise solche Änderungen der Netzspannung infolge von Produktionspausen in Industriebetrieben. Nicht dazu gehören Änderungen der Netzspannung, die sich über beispielsweise über weniger als 10 Millisekunden erstrecken

Beim Stand der Technik sind auch DE 3223786 und DE 4110225 bekannt.

Der Erfindung liegt die Aufgabe zugrunde, ein Verfahren zur Ausgangsspannungsbegrenzung für einen spannungs-/frequenzgeführten Umrichter mit Zwischenkreis und einen Umrichter weiterzubilden unter Vermeidung der vorgenannten Nachteile. Insbesondere sollen Pendelschwingungen bei leerlaufendem oder nur ein geringes Drehmoment erzeugendem Motor mit geringer Lastträgheit vermieden werden und die Lösung sehr kostengünstig sein.

Erfindungsgemäß wird die Aufgabe bei einem Verfahren zur Ausgangsspannungsbegrenzung für einen spannungs-/frequenzgeführten Umrichter mit Zwischenkreis gelöst nach den in Anspruch 1 angegebenen Merkmalen und bei einem Umrichter nach den in Anspruch 11 angegebenen Merkmalen. Ein wesentliches Merkmal der Erfindung ist bei dem Verfahren, dass der Betrag des Ausgangsspannungszeigers auf einen ersten Wert $c*U_{max}$, insbesondere $c = 1/\sqrt{3}$, begrenzt wird, und auf einen zweiten Wert begrenzt wird, wobei der zweite Wert direkt aus der Zwischenkreisspannung, insbesondere zu $U_z/\sqrt{3}$, bestimmt wird, und wobei der erste Wert aus dem zeitlichen Verlauf der Zwischenkreisspannung abgeleitet wird, insbesondere unter Verwendung von Übertragungsgliedern mit Zeitverhalten.

Wesentlicher Vorteil der Erfindung ist, dass Pendelschwingungen infolge von Rückkoppeleffekten vermieden werden, insbesondere bei leerlaufendem oder nur ein geringes Drehmoment erzeugendem Motor mit geringer Lastträgheit. Dabei weist das Ableiten aus dem zeitlichen Verlauf der Zwischenkreisspannung ein geeignet wählbares Zeitverhalten oder eine geeignet wählbare wesentliche Zeitkonstante auf. Bei einer geeigneten Wahl folgt $U_{max}$ einerseits so stark zeitverzögert einem Ansteigen der Zwischenkreisspannung infolge generatorischen Betriebs, dass der oben genannte Rückkoppelpfad aufgebrochen wird. Hierfür ist das Zeitverhalten oder die wesentliche Zeitkonstante vorteilhafterweise sehr viel größer wählbar als die typische Periodendauer der zu verhindernden Pendelschwingungen. Andererseits folgt bei dieser geeigneten Wahl $U_{max}$ dem Ansteigen der Zwischenkreisspannung infolge Netzspannungsänderungen nahezu verzögerungsfrei. Damit ist die Netzspannung stets sehr gut ausnutzbar.

Weiterer wesentlicher Vorteil ist bei der Erfindung, dass durch den zweiten begrenzenden Wert die Sinusform für alle Werte von $U_{max}$ erhalten bleibt, insbesondere auch dann, wenn $U_z$ den Wert von $U_{max}$ unterschreitet.

Weiterer Vorteil ist auch, dass die Lösung sehr kostengünstig realisierbar ist, insbesondere bei Verwendung eines hohen Software-Anteils bei der Realisierung.

Bei einer weiteren vorteilhaften Ausgestaltung folgt $U_{max}$ einer Zunahme der Zwischenkreisspannung langsamer als einer Abnahme der Zwischenkreisspannung. Dabei ist die Änderungsgeschwindigkeit der Netzspannung langsamer als das erfindungsgemäß kennzeichnende Folgen einer Zunahme der Netzspannung. Vorteilhafterweise hat durch das schnelle Absinken von $U_{max}$ bei fallender Zwischenkreisspannung der bisherige Zeitverlauf keinen Einfluss mehr. Also hat auch eine vergangene Überhöhung der Zwischenkreisspannung bei einer erneuten Überhöhung der Zwischenkreisspannung keinen Einfluss mehr Somit werden die dämpfenden Eigenschaften des gesamten Systems erhöht.

Bei einer vorteilhaften Ausgestaltung wird der Wert $U_{max}$ mittels Verwendung eines Filter-Verfahrens erzeugt, wobei der Wert $U_{max}$ Ausgang eines zeitvarianten Filters mit mindestens einer Zeitkonstante ist, und wobei die Zwischenkreisspannung Eingangswert dieses Filters ist,

und wobei mindestens eine Zeitkonstante größer ist, wenn der Eingangswert größer ist als der Ausgangswert des Filters als wenn der Eingangswert kleiner ist als der Ausgangswert des Filters.

Von Vorteil ist dabei, dass ein einfaches Filter erster Ordnung ausreicht, das einfach und kostengünstig in der angegebenen Weise modifizierbar ist, also zeitvariant gestaltbar ist Auf diese Weise kann die Erfindung schnell und einfach in bestehende Verfahren eingefügt werden.

Bei einer weiteren vorteilhaften Ausgestaltung wird der Wert $U_{max}$ als Ausgang eines Filter-Verfahrens erzeugt, das ein Minimalwertfilter aufweist. Von Vorteil ist, dass das Ansteigen von $U_{max}$ unabhängig von der Überhöhung der Zwischenkreisspannung ist und daher die Auswirkung derselben auf den Betrag der Ausgangsspannung optimal unterdrückt ist.

Bei einer vorteilhaften Ausgestaltung wird der Wert $U_{max}$ zusätzlich als Funktion des Quotienten aus einerseits einem Wert oder Schätzwert für den Strom, insbesondere den Scheinstrom, und andererseits einem **Motor-Nennstrom** variiert wird. Von Vorteil ist dabei, dass die bei vielen Umrichtern des Standes der Technik verfügbare Stromerfassung nutzbar ist und schnell und einfach erfindungsgemäß in kostengünstiger Weise verwendbar und einsetzbar ist.

Ein weiterer wesentlicher Vorteil ist dabei, dass bei keiner oder geringer Last die volle Spannungsausnutzung nicht benötigt wird und somit der Quotient niedrig wählbar ist. **Bei Überhöhungen der Zwischenkreisspannung bleibt der Begrenzungswert glatt oder weist nur geringe Schwankungen auf**.

Bei einer weiteren vorteilhaften Ausgestaltung werden statt der Größe Strom andere verwandte Größen wie Drehmoment oder entsprechende Größen oder beliebiger belastungsabhängige Größen verwendet. Somit können auch Größen vorteilhafterweise verwendet werden, die bei Umrichtern nach Stand der Technik schon vorhanden sind. Von Vorteil ist dabei, dass

die bei vielen Umrichtern des Standes der Technik im Steuer- und Regelverfahren verfügbare Größen nutzbar sind und schnell und einfach erfindungsgemäß in kostengünstiger Weise verwendbar und einsetzbar sind.

Bei einer vorteilhaften Ausgestaltung wird der Wertebereich für $U_{max}$ auf einen positiven Wert, insbesondere das $\sqrt{3}/2$ -fache des Spitzenwertes der als minimal zulässig spezifizierten Netzleiterspannung, nach unten begrenzt. Von Vorteil ist dabei, dass nach Netzspannungseinbrüchen schnell der erfindungsgemäße Betrieb ermöglicht wird.

Weitere vorteilhafte Ausgestaltungen ergeben sich aus den Unteransprüchen.

Ein wesentliches Merkmal der Erfindung ist bei dem Umrichter zur Speisung eines Elektromotors, dass von der Steuereinheit Mittel zur Bestimmung eines Sollwerts für den Betrag des Ausgangsspannungszeigers aus einer Frequenz umfasst sind,

denen Mittel zur Begrenzung des Betrages des Ausgangsspannungszeigers auf einen ersten Wert $c \neq U_{\max}$,

insbesondere $c = 1/\sqrt{3}$, nachgeordnet sind, deren Ausgang einem Mittel zur Begrenzung auf einen zweiten Wert zugeführt ist,

wobei Mittel zur Bestimmung des zweiten Wertes direkt aus der Zwischenkreisspannung vorgesehen sind,

und wobei Mittel zur Bestimmung des ersten Wertes aus dem zeitlichen Verlauf der Zwischenkreisspannung vorgesehen sind, insbesondere die Übertragungsglieder mit Zeitverhalten umfassen.

Die damit verbundenen Vorteile entsprechen den genannten bzw. den aus den Unteransprüchen entnehmbaren

**Bezugszeichenliste**

1    Netzspannung
2    Gleichrichtereinheit
3    Wechselrichter
4    Elektromotor
5    Steuereinheit
C    Kondensator

Die Erfindung wird nun anhand von Abbildungen näher erläutert,

Die schon erläuterte Figur 1 betrifft nicht nur den Stand der Technik, sondern ist auch eine Grundlage für ein erfindungsgemäßes Ausführungsbeispiel.

Das erfindungsgemäße Ausführungsbeispiel erweitert den Stand der Technik, der in der schon erläuterten Figur 2 dargestellt ist, indem $U_{\max}$ zur zusätzlichen Begrenzung fortlaufend zur Verfügung gestellt wird.

In der Figur 3 ist ein erfindungsgemäßes Ausführungsbeispiel gezeigt. Dabei wird aus der Zwischenkreisspannung $U_z$ mittels eines Minimalwertfilters der Wert $U_{\max,0}$ erzeugt. Aus diesem Wert $U_{\max,0}$ wird durch Multiplikation mit einem Bewertungsfaktor $K$, der aus dem Quotienten des Scheinstromes und des **Motor-Nennstromes** gemäß einer Kennlinie bestimmt wird, $U_{\max}$ bestimmt.

Das Minlmalwertfilter ist in der Figur 3 in seinem funktionalen Verhalten mittels einer elektronischen Schaltskizze, umfassend eine Diode, einen Kondensator C, eine Stromquelle I und einer Spannungsquelle $U_z$ beschrieben. Die Stromquelle I liefert dabei einen konstanten Strom und baut so lange die Spannung am Kondensator auf, bis die Spannung am Kondensator gleich groß wird wie die Spannung der Spannungsquelle $U_z$ und die Diode daher nicht mehr im sperrenden Zustand ist. Dabei ist die Zwischenkreisspannung $U_z$ eine zeitvariable Spannungsquelle Die Spannung am Kondensator ist der Ausgangswert $U_{\max,0}$ des Minimalwertfilters.

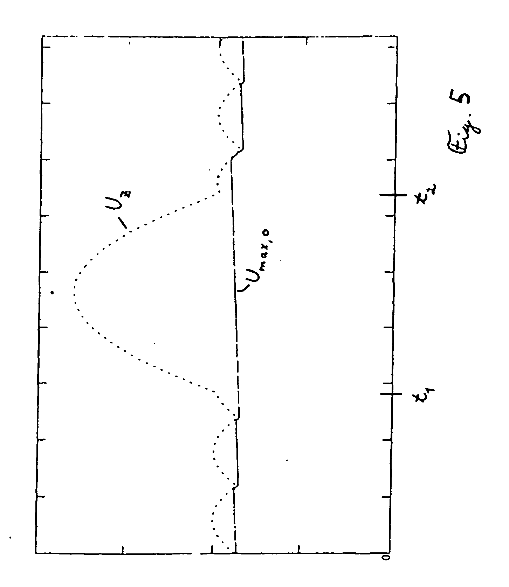

In der Figur 5 ist ein beispielhafter Verlauf der Zwischenkreisspannung $U_z$ gezeigt. Dabei ist bis zum Zeitpunkt $t_1$ der Motor motorisch betrieben. Darauf folgt eine kurz andauernde generatorische Zeitabschnitt, infolge dessen die Zwischenkreisspannung eine kurzzeitige Überhöhung aufweist. Ab dem Zeitpunkt $t_2$ folgt die Zwischenkreisspannung wieder der gleichgerichteten Netzspannung. Bei einem solchen Verlauf der Zwischenkreisspannung ergibt sich am Ausgang des Minimalwertfilters der Verlauf $U_{\max,0}$ Wie gezeigt, steigt $U_{\max,0}$ langsam an, solange die Zwischenkreisspannung größer als $U_{\max,0}$ ist und fällt sehr schnell mit der Zwischenkreisspannung ab, sobald diese $U_{\max,0}$ unterschreiten würde

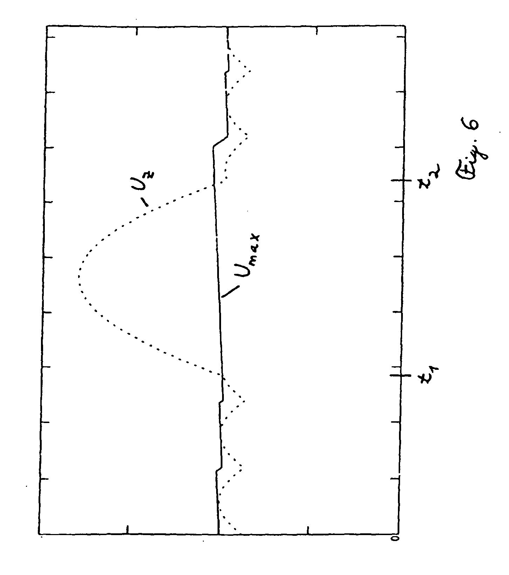

In der Figur 6 sind wiederum derselbe Verlauf der Zwischenkreisspannung und ein sich daraus ergebender Verlauf von $U_{\max}$ gezeigt, wobei ein Wert von

$$K = 2/\sqrt{3} \approx 1{,}15$$ für den Bewertungsfaktor gewählt ist.

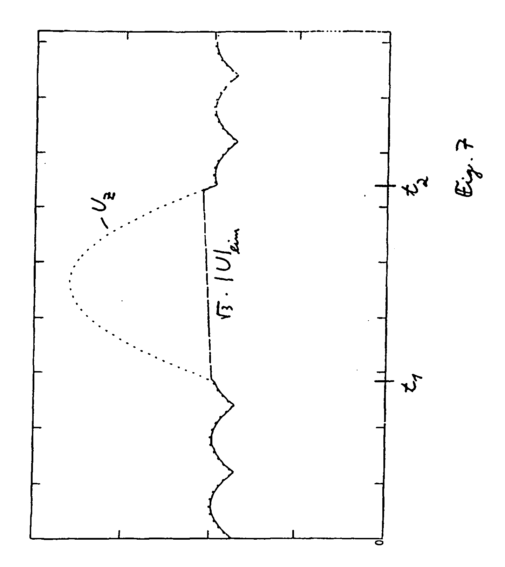

In der Figur 7 ist die resultierende Begrenzung als durchgezogene Linie entsprechend dem $\sqrt{3}$ -fachen des Betrages des begrenzten Ausgangsspannungszeigers $|U|_{\lim}$ gezeigt. Sie ergibt sich durch Begrenzung auf den Verlauf der Zwischenkreisspannung $U_z$ und durch Begrenzung auf den Verlauf von $U_{\max}$, also aus dem Minimum beider Verläufe. Bei dieser Wahl wird die Spitzenspannung der Zwischenkreisspannung im motorischen Betrieb sehr gut genutzt.

Bei einer Realisierung des Verfahrens unter Benutzung eines Mikroprozessors wird der Inhalt des Minimalwertfilters fortlaufend mit der aktuellen Zwischenkreisspannung verglichen Ist die Zwischenkreisspannung niedriger als der Filterinhalt, so wird dieser auf den Wert der momentanen Zwischenkreisspannung gesetzt. Ist dies nicht der Fall, so wird der Filterinhalt schrittweise erhöht.

Die Zeitkonstante oder Integrierkonstante wird dabei **ausreichend** groß gewählt, beispielsweise 25 V/s, so dass der resultierende Begrenzungswert nur sehr langsam ansteigt, auch wenn infolge generatorischen Betriebs die Zwischenkreisspannung sehr schnell zunimmt. Trotzdem ist aber gewährleistet, dass sich der Begrenzungswert an Netzspannungsänderungen - oder sehr schnellen Wechseln der Betriebsart von Generatorisch auf Motorisch - adaptiert.

Beim Power-Up wird das Minimalwertfilter auf einen sehr hohen Wert gesetzt, da bereits nach dem ersten Messwert von $U_z$ das Filter auf den richtigen Wert gesetzt wird.

In einem weiteren erfindungsgemäßen Ausführungsbeispiel wird der Wert $U_{max,0}$ mit einem Bewertungsfaktor $K = 1$ multipliziert. In weiteren erfindungsgemäßen Ausführungsbeispielen werden andere konstante Bewertungsfaktoren verwendet. Dies ist vorteilhaft bei Umrichtern, denen kein belastungsabhängiger Wert zur Verfügung steht.

In einem weiteren erfindungsgemäßen Ausführungsbeispiel ist der belastungsabhängige Faktor eine Funktion des Quotienten des Modellwertes für den Betrag des Motorstroms und dem Betrag des **Motor-Nennstroms**. Analog wird in einer weiteren erfindungsgemäßen Ausführungsform statt des Stromes das Drehmoment oder eine andere belastungsabhängige Größe verwendet.

In einem weiteren erfindungsgemäßen Ausführungsbeispiel ist die Funktion des Quotienten gemäß Figur 3 ausgeführt. Sie nimmt für Werte des Quotienten von 0 bis 0,5 den Wert 1 an Von 0,5 bis 1 nimmt sie linear zu, und von 1 an nimmt sie den Wert 1,15 an. Bei anderen erfindungsgemäßen Ausführungsbeispielen werden andere Werte verwendet oder die Funktion verändert, um Verbesserungen am Motor-Umrichter-System mit Last zu erzielen. Dem Fachmann ist das Optimieren einer solchen Funktion geläufig

In einem weiteren erfindungsgemäßen Ausführungsbeispiel kann das Minimalwertfilter auch durch ein PT1-Filter ersetzt werden. In einem weiteren erfindungsgemäßen Ausführungsbeispiel wird das PT1-Filter dahingehend erweitert, dass es zeitvariant ausgeführt wird. Es weist dann eine Zeitkonstante auf, die zwei unterschiedliche Werte $T_{auf}$ und $T_{ab}$ annimmt, wobei der erste Wert $T_{auf}$ größer als der zweite Wert $T_{ab}$ ist. Dabei ist der erste Wert $T_{auf}$ wirksam, wenn die Zwischenkreisspannung $U_z$ größer ist als die Ausgangsspannung $U_{max,0}$ des Filters. Der zweite Wert $T_{ab}$ ist wirksam, wenn die Zwischenkreisspannung $U_z$ kleiner ist als die Ausgangsspannung $U_{max0}$ des Filters Der zweite Wert $T_{ab}$ wird in einem weiteren erfindungsgemäßen Ausführungsbeispiel auf den Wert Null gesetzt.

In weiteren erfindungsgemäßen Ausführungsbeispielen werden auch Filter höherer Ordnung mit zusätzlichen Zeitkonstanten oder Werten verwendet, die ein im Wesentlichen ähnliches Verhalten aufweisen.

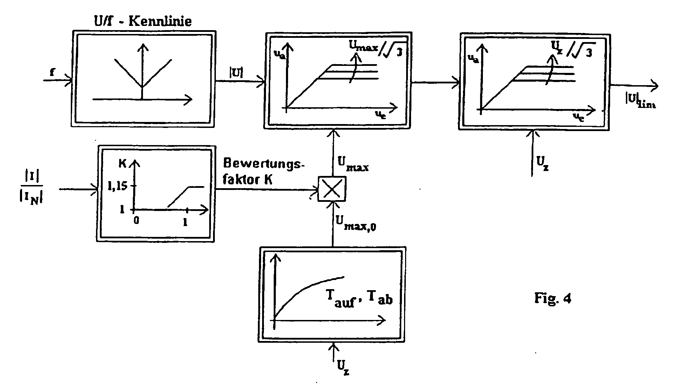

Mit den beschriebenen Filtern und den Verfahren und Anordnungen nach insbesondere den Figuren 3 und 4 treten keine unerwünschten Rückkoppeleffekte der oben genannten Art auf.

Durch das beschriebene erfindungsgemäße verzögerte Ansteigen dieses Begrenzungswerts werden Rückkoppeleffekte und daraus resultierende Schwingungen verhindert

Mit der Erfindung kann vor allem bei Weitspannungsgeräten, also Umrichtern, die an verschiedenen Netzspannungen betreibbar sind, die volle Ausgangsspannung genutzt werden ohne Notwendigkeit einer Eingabe eines Wertes und trotzdem sichergestellt werden, dass es nicht zu den Rückkoppeleffekten oder Schwingungen kommt

Die Erfindung schließt dem Fachmann geläufige Realisierungsarten, auch in Hinsicht der Verwirklichung mittels Aufteilung des Verfahrens in Hardware oder Software, oder Varianten ein.

**Patentansprüche**

1. Verfahren zur Ausgangsspannungsbegrenzung für einen spannungs-/frequenzgeführten Umrichter mit Zwischenkreis,
   **wobei**
   von einer Steuereinheit zu einer Frequenz ein Sollwert für den Betrag des Ausgangsspannungszeigers bestimmt wird,
   **danach** der Betrag des Ausgangsspannungszeigers auf einen ersten Wert $c*U_{max}$, insbesondere

   $$c = 1/\sqrt{3}\,,$$ begrenzt wird, und danach auf einen zweiten Wert begrenzt wird,
   wobei der zweite Wert direkt aus der Zwischenkreisspannung bestimmt wird, insbesondere $U_z/\sqrt{3}$ beträgt,
   und wobei der erste Wert aus dem zeitlichen Verlauf der Zwischenkreisspannung hergeleitet wird, insbesondere unter Verwendung von Übertragungsgliedern mit Zeitverhalten.

2. Verfahren nach Anspruch 1,
   **dadurch gekennzeichnet, dass**
   $U_{max}$ innerhalb eines Wertebereiches einer Zunahme der Zwischenkreisspannung langsamer folgt als einer Abnahme der Zwischenkreisspannung.

3. Verfahren nach mindestens einem der vorangegangenen Ansprüche,
   **dadurch gekennzeichnet, dass**
   der Wert $U_{max}$ mittels Verwendung eines Filter-Verfahrens erzeugt wird,
   wobei der Wert $U_{max}$ Ausgang eines zeitvarianten Filters mit mindestens einer Zeitkonstante ist,
   und wobei die Zwischenkreisspannung Eingangswert dieses Filters ist,
   und wobei mindestens eine Zeitkonstante größer ist, wenn der Eingangswert größer ist als der Ausgangswert des Filters
   als
   wenn der Eingangswert kleiner ist als der Ausgangswert des Filters

4. Verfahren nach mindestens einem der Ansprüche 1 bis 3,
   **dadurch gekennzeichnet, dass**
   der Wert $U_{max}$ als Ausgang eines Filter-Verfahrens erzeugt wird, das ein Minimalwertfilter aufweist.

**5.** Verfahren nach mindestens einem der vorangegangenen Ansprüche
**dadurch gekennzeichnet, dass**
der Wert $U_{max}$ zusätzlich abhängig vom Verlauf oder vom gefilterten Verlauf der Belastung, einem Schätzwert hiervon oder einer dazu proportionalen Größe variiert wird.

**6.** Verfahren nach mindestens einem der Ansprüche 1 bis 5,
**dadurch gekennzeichnet, dass**
der Wert $U_{max}$ zusätzlich als Funktion des Quotienten
aus einerseits einem Wert oder Schätzwert für den Strom, insbesondere den Scheinstrom, und andererseits einem **Motor-Nennstrom** variiert wird.

**7.** Verfahren nach mindestens einem der Ansprüche 1 bis 5,
**dadurch gekennzeichnet, dass**
der Wert $U_{max}$ zusätzlich als Funktion des Quotienten
aus einerseits einem Wert für das Drehmoment oder Schätzwert für das Drehmoment und andererseits einem **Motor-Nennmoment** variiert wird.

**8.** Verfahren nach Anspruch 7 oder 8,
**dadurch gekennzeichnet, dass**
der Wert $U_{max}$ mit einer Funktion des Quotienten multipliziert wird, wobei diese Funktion zunimmt oder abschnittsweise konstant bleibt, insbesondere von 1,0 nach $2/\sqrt{3}$ zunimmt, für Werte des Quotienten von Null bis zu einem Wert.

**9.** Verfahren nach mindestens einem der vorangegangenen Ansprüche,
**dadurch gekennzeichnet, dass**
der Wertebereich von $U_{max}$ nach unten durch einen positiven Wert, insbesondere das $\sqrt{3}/2$ - fache des Spitzenwertes der als minimal zulässig spezifizierten Netzleiterspannung, begrenzt ist.

**10.** Verfahren nach mindestens einem der vorangegangenen Ansprüche
**dadurch gekennzeichnet, dass**
das Verfahren durch Software, Hardware oder eine Kombination von Software und Hardware realisiert wird oder eingebaut wird in ein bestehendes Steuer- und Regelverfahren für einen Umrichter

**11.** Umrichter zur Speisung eines Elektromotors, umfassend eine mit Netzspannung versorgbare, eine Zwischenkreisspannung aufweisende Gleichrichtereinheit, eine Steuereinheit und einen mit der Gleichrichtereinheit, dem Elektromotor und der Steuereinheit verbindbaren Wechselrichter, wobei die Steuereinheit derart gestaltet ist, dass in ihr mittels Hardware, Software oder einer Kombination von Hardware und Software mindestens ein Steuer- oder Regel-Verfahren für den Elektromotor mit Umrichter aufweist,
**dadurch gekennzeichnet, dass**
von der Steuereinheit Mittel zur Bestimmung eines Sollwerts für den Betrag des Ausgangsspannungszeigers aus einer Frequenz vorgesehen sind, denen Mittel zur Begrenzung des Betrages des Ausgangsspannungszeigers auf einen ersten Wert $c*U_{max}$, insbesondere $c = 1/\sqrt{3}$, nachgeordnet sind, deren Ausgang einem Mittel zur Begrenzung auf einen zweiten Wert zugeführt ist, wobei Mittel zur Bestimmung des zweiten Wertes direkt aus der Zwischenkreisspannung vorgesehen sind, und wobei Mittel zur Bestimmung des ersten Wertes aus dem zeitlichen Verlauf der Zwischenkreisspannung vorgesehen sind, insbesondere die Übertragungsglieder mit Zeitverhalten umfassen.

**12.** Umrichter nach Anspruch 11, wobei die Steuereinheit derart gestaltet ist, dass das Steuer- oder Regel-Verfahren nach mindestens einem der Ansprüche 1 bis 9 durchführbar ist

## Claims

**1.** Method for output voltage limitation for a voltage/frequency controlled converter with intermediate circuit,
wherein
a desired value for the modulus of the output voltage vector at a frequency is determined by a control unit, thereafter the modulus of the output voltage vector is limited to a first value c*$U_{max}$, in particular c = $1/\sqrt{3}$, and thereafter is limited to a second value, the second value being determined directly from the intermediate circuit voltage, in particular being $U_z/\sqrt{3}$, and the first value being derived from the time profile of the intermediate circuit voltage, in particular by using transfer elements with time response.

**2.** Method according to Claim 1,
**characterised in that**
$U_{max}$ follows an increase of the intermediate circuit voltage more slowly than a decrease of the intermediate circuit voltage, within a range of values.

**3.** Method according to at least one of the preceding claims,
**characterised in that**
the value $U_{max}$ is generated by using a filter method,

the value $U_{max}$ being the output of a time-variant filter with at least one time constant,

and the intermediate circuit voltage being the input value of this filter,

and at least one time constant being greater when the input value is greater than the output value of the filter

than

when the input value is less than the output value of the filter.

4. Method according to at least one of Claims 1 to 3, **characterised in that** the value $U_{max}$ is generated as the output of a filter method having a minimum-value filter.

5. Method according to at least one of the preceding claims, **characterised in that** the value $U_{max}$ is varied additionally as a function of the profile or the filtered profile of the load, an estimated value thereof or a quantity proportional thereto.

6. Method according to at least one of Claims 1 to 5, **characterised in that** the value $U_{max}$ is varied additionally as a function of the quotient of a value or an estimated value for the current, in particular the apparent current, on the one hand, and of a motor rated current, on the other hand.

7. Method according to at least one of Claims 1 to 5, **characterised in that** the value $U_{max}$ is varied additionally as a function of the quotient of a value for the torque or an estimated value for the torque, on the one hand, and of a motor rated torque, on the other hand.

8. Method according to Claim 7 or 8, **characterised in that** the value $U_{max}$ is multiplied by a function of the quotient, this function increasing or, in some sections, remaining constant, in particular increasing from 1.0 towards $2/\sqrt{3}$, for values of the quotient from zero up to a value.

9. Method according to at least one of the preceding claims, **characterised in that** the range of values of $U_{max}$ is limited downwards by a positive value, in particular $\sqrt{3}/2$-times the peak value of the line conductor voltage specified as the minimum permissible voltage.

10. Method according to at least one of the preceding claims,

**characterised in that** the method is implemented by software, hardware or a combination of software and hardware or is incorporated in an existing control and regulating method for a converter.

11. Converter for feeding an electric motor, comprising a rectifier unit which can be supplied with line voltage and has an intermediate circuit voltage, a control unit, and an inverter which can be connected to the rectifier unit, the electric motor and the control unit,

the control unit being designed in such a manner that in it, by means of hardware, software or a combination of hardware and software, it has at least one control or regulating method for the electric motor with converter,

**characterised in that** means for determining a desired value for the modulus of the output voltage vector from a frequency are provided by the control unit,

after which means there are arranged means for limiting the modulus of the output voltage vector to a first value $c*U_{max}$, in particular $c = 1/\sqrt{3}$, the output of which means is supplied to a means for limiting to a second value,

means for determining the second value directly from the intermediate circuit voltage being provided,

and means for determining the first value from the time profile of the intermediate circuit voltage being provided, in particular comprising the transfer elements with time response.

12. Converter according to Claim 11, wherein the control unit is designed in such a manner that the control or regulating method can be carried out according to at least one of Claims 1 to 9.

## Revendications

1. Procédé de limitation de la tension de sortie pour un convertisseur commandé en tension/fréquence avec circuit intermédiaire,

selon lequel

une valeur de consigne pour le module du vecteur de tension de sortie pour une fréquence est déterminée par une unité de commande,

ensuite le module du vecteur tension de sortie est limité à une première valeur $c*U_{max}$, en particulier $c = 1/\sqrt{3}$, et ensuite limité à une deuxième valeur,

la deuxième valeur étant déterminée directement à partir de la tension de circuit intermédiaire, en particulier égale à $U_z/\sqrt{3}$,

et la première valeur étant déduite de la variation dans le temps de la tension de circuit intermédiaire, en particulier en utilisant des circuits de transmission avec comportement dans le temps.

**2.** Procédé selon la revendication 1,
**caractérisé en ce que**
à l'intérieur d'une plage de valeurs, $U_{max}$ suit une augmentation de la tension de circuit intermédiaire plus lentement qu'une diminution de la tension de circuit intermédiaire.

**3.** Procédé selon au moins une des revendications précédentes,
**caractérisé en ce que**
la valeur $U_{max}$ est générée en utilisant un procédé de filtrage,
la valeur $U_{max}$ étant la sortie d'un filtre variable dans le temps à au moins une constante de temps,
et la tension de circuit intermédiaire étant la valeur d'entrée de ce filtre,
et au moins une constante de temps étant plus grande
quand la valeur d'entrée est plus grande que la valeur de sortie du filtre
que
quand la valeur d'entrée est plus petite que la valeur de sortie du filtre.

**4.** Procédé selon au moins une des revendications 1 à 3,
**caractérisé en ce que**
la valeur $U_{max}$ est générée comme sortie d'un procédé de filtrage qui présente un filtre à valeur minimale.

**5.** Procédé selon au moins une des revendications précédentes
**caractérisé en ce que**
l'on fait en plus varier la valeur $U_{max}$ en fonction de la variation ou de la variation filtrée de la charge, d'une estimation de celle-ci ou d'une grandeur proportionnelle à celle-ci.

**6.** Procédé selon au moins une des revendications 1 à 5,
**caractérisé en ce que**
l'on fait en plus varier la valeur $U_{max}$ comme fonction du quotient
d'une part d'une valeur ou d'une estimation du courant, en particulier du courant apparent,
et, d'autre part, d'un courant nominal de moteur.

**7.** Procédé selon au moins une des revendications 1 à 5,
**caractérisé en ce que**
l'on fait en plus varier la valeur $U_{max}$ comme fonction du quotient d'une part d'une valeur du couple ou d'une estimation du couple, et, d'autre part, d'un couple nominal de moteur.

**8.** Procédé selon la revendication 7 ou 8,
**caractérisé en ce que**
la valeur $U_{max}$ est multipliée par une fonction du quotient, cette fonction augmentant ou restant constante par intervalles, en particulier augmentant de 1,0 à $2/\sqrt{3}$, pour des valeurs du quotient de zéro jusqu'à une valeur.

**9.** Procédé selon au moins une des revendications précédentes,
**caractérisé en ce que**
la plage de valeurs de $U_{max}$ est limitée vers le bas par une valeur positive, en particulier le multiple de $\sqrt{3}/2$ de la valeur de crête de la tension de conducteur secteur spécifiée comme admissible au minimum.

**10.** Procédé selon au moins une des revendications précédentes
**caractérisé en ce que**
le procédé est réalisé par logiciel, matériel ou par une combinaison de logiciel et de matériel ou est intégré dans un procédé de commande et de régulation existant pour un convertisseur.

**11.** Convertisseur pour l'alimentation d'un moteur électrique,
comprenant une unité de redressement pouvant être alimentée par la tension secteur et présentant une tension de circuit intermédiaire, une unité de commande et un onduleur pouvant être relié à l'unité de redressement, au moteur électrique et à l'unité de commande,
l'unité de commande étant conçue de façon qu'elle présente au moins un procédé de commande ou de régulation pour le moteur électrique avec convertisseur réalisé par logiciel, matériel ou par une combinaison de logiciel et de matériel,
**caractérisé en ce que**
des moyens sont prévus par l'unité de commande pour déterminer une valeur de consigne pour le module du vecteur de tension de sortie à partir d'une fréquence,
à la suite desquels sont placés des moyens pour limiter le module du vecteur de tension de sortie à une première valeur $c*U_{max}$, en particulier $c = 1/\sqrt{3}$, dont la sortie est amenée à un moyen pour la limitation à une deuxième valeur,
des moyens pour déterminer la deuxième valeur directement à partir de la tension de circuit intermédiaire étant prévus,
et des moyens pour déterminer la première valeur à partir de la variation dans le temps de la tension de circuit intermédiaire, qui comprennent en particulier des circuits de transmission avec comportement dans le temps, étant prévus.

**12.** Convertisseur selon la revendication 11,
dans lequel l'unité de commande est conçue de façon que le procédé de commande ou de régulation selon au moins une des revendications 1 à 9 soit réalisable.

Fig.1

U/f - Kennlinie

**Fig. 2**
**(Stand der Technik)**

U/f - Kennlinie

Bewertungsfaktor K

**Fig. 3**

U/f - Kennlinie

Bewertungs-faktor K

$\dfrac{|I|}{|I_N|}$

$|U|$

$U_{max}$

$U_{max,0}$

$U_z$

$U_z$

$\dfrac{U_{max}}{\sqrt{3}}$

$\dfrac{U_z}{\sqrt{3}}$

$|U|_{lim}$

$T_{auf}, T_{ab}$

Fig. 4

$U_z$

$U_{max,o}$

$t_1$  $t_2$

Fig. 5

Fig. 6

Fig. 7

**IN DER BESCHREIBUNG AUFGEFÜHRTE DOKUMENTE**

**In der Beschreibung aufgeführte Patentdokumente**

- DE 3223786
- DE 4110225